# EUROPÄISCHE PATENTANMELDUNG

(11) **EP 0 890 688 A1**
(43) Veröffentlichungstag der Anmeldung: **13.01.1999**
(21) Anmeldenummer: 98106854.7
(22) Anmeldetag: 15.04.1998
(51) Int. Cl.: E04D 13/00, E04D 13/18

(54) **Vorrichtung zur Befestigung von kastenförmigen Einrichtungen**

(30) Priorität: 09.07.1997 DE 19729309
(71) Anmelder: Binkert, Hugo, D-79774 Albbruck-Birndorf (DE)
(72) Erfinder: Binkert, Hugo, D-79774 Albbruck-Birndorf (DE)
(74) Vertreter: Manitz, Finsterwald & Partner

(57) **Zusammenfassung**

Vorrichtung zur Befestigung von kastenförmigen Einrichtungen (1) wie Sonnenkollektoren oder Solarmoduln auf geneigten Gebäudedächern mit Ziegel- oder ähnlicher Eindeckung, wobei zur Verringerung der Herstellungskosten und Vereinfachung der Installation ein unterhalb der Einrichtung anzuordnendes, am Dachstuhl (7) verankerbares Abstützelement (4), auf welchem die Einrichtung (1) mit ihrem unteren Ende abstützbar ist, und eine am oberen Ende der Einrichtung (1) angreifende, am Dachstuhl (7) verankerbare obere Haltevorrichtung (9) vorgesehen sind.

## Beschreibung

Die vorliegende Erfindung betrifft eine Vorrichtung zur Befestigung von kastenförmigen Einrichtungen wie Sonnenkollektoren oder Solarmoduln auf geneigten Gebäudedächern mit Ziegel- oder ähnlicher Eindeckung.

Sonnenkollektoren und ähnliche kastenförmige Einrichtungen werden bislang mittels Rahmenkonstruktionen auf Gebäudedächern befestigt. Hierfür werden die Sonnenkollektoren auf den Rahmen aufgeschraubt, der seinerseits am Dachstuhl befestigt wird. Dies ist sowohl vom Material, von der Herstellung als auch von der Montage her kostenaufwendig. Außerdem ist die Befestigung des Rahmens auf einem Dach mit Ziegel- oder ähnlicher Eindeckung schwierig oder kann zu Beschädigungen der Ziegel führen.

Der Erfindung liegt die Aufgabe zugrunde, eine Vorrichtung der eingangs genannten Art anzugeben, die diese Nachteile nicht aufweist. Insbesondere soll eine einfache und kostengünstige Befestigungsvorrichtung geschaffen werden, die zudem ohne Beschädigung der Dacheindeckung angebracht werden kann.

Diese Aufgabe wird gelöst durch ein unterhalb der Einrichtung anzuordnendes, am Dachstuhl verankerbares Abstützelement, auf welchem die Einrichtung mit ihrem unteren Ende abstützbar ist, und eine am oberen Ende der Einrichtung angreifende, am Dachstuhl verankerbare obere Haltevorrichtung.

Der Erfindungsgedanke besteht also darin, als Befestigungsvorrichtung lediglich ein unterhalb der Einrichtung anzuordnendes Abstützelement und eine an der Oberseite der Einrichtung angreifende obere Haltevorrichtung vorzusehen. Gegenüber einem aufwendigen Rahmen werden dadurch die Herstellungskosten sowie die Materialkosten deutlich gesenkt. Die kastenförmige Einrichtung ist durch ihr Eigengewicht auf dem Abstützelement bereits ausreichend fest gehalten. Die Haltevorrichtung an ihrem oberen Ende verhindert ein Abheben der Einrichtung bei starkem Wind.

Bevorzugt weist das Abstützelement eine nach oben offene Aufnahme für das untere Ende der Einrichtung oder für ein mit dieser verbundenes Eingriffselement auf. Hierdurch ist das untere Ende der Einrichtung sicher mit dem Abstützelement verbunden, so daß auch hier bei starkem Wind kein Abheben erfolgen kann. Ein Herausheben der Einrichtung nach oben ist durch das Eigengewicht der Einrichtung verhindert.

Bevorzugt ist das Abstützelement als spitzes Winkel- oder als U-Profil ausgebildet, welches sich insbesondere über die gesamte Breite der Einrichtung erstreckt. Die Herstellung ist dadurch besonders einfach und die Verankerung des unteren Endes der Einrichtung besonders sicher.

Nach einer Ausgestaltung der Erfindung ist ein am unteren Ende der Einrichtung befestigbares Winkelprofil vorgesehen, welches zum Eingriff in die Aufnahme des Abstützelementes ausgebildet ist. Es reicht dadurch aus, wenn ein Schenkel des Winkelprofils in die Aufnahme eingreift, so daß diese nur sehr schmal ausgebildet sein muß. Zudem weisen Sonnenkollektoren oftmals an ihrem unteren Ende bereits Winkelprofile oder ähnliche Vorsprünge auf, die zum Eingriff in eine Aufnahme geeignet sind.

Nach einer weiteren Ausgestaltung der Erfindung ist das Abstützelement über mindestens eine unter die Ziegel greifende Lasche am Dachstuhl befestigbar. Auf diese Weise kann das Abstützelement ohne Zerstörung der Ziegel am Dachstuhl befestigt werden.

Besonders bevorzugt ist es, wenn die Lasche mit ihrem unteren Ende mit dem Abstützelement verbunden, insbesondere vernietet ist, und wenn das obere Ende der Lasche am Dachstuhl, insbesondere einer Dachlatte, festschraubbar ist. Die Installation des Abstützelementes ist hierdurch besonders schnell und einfach möglich.

Nach einer weiteren Ausgestaltung der Erfindung ist die obere Haltevorrichtung als unter die Ziegel greifende Lasche ausgebildet. Hierdurch wird eine Befestigung auch der oberen Haltevorrichtung am Dachstuhl ohne Zerstörung der Ziegel ermöglicht.

Besonders bevorzugt ist es, wenn das obere Ende der Lasche am Dachstuhl, insbesondere einer Dachlatte, festschraubbar ist, und wenn das untere Ende vom Dachstuhl weg abgewinkelt und mit dem oberen Ende der kastenförmigen Einrichtung verbindbar, insbesondere vernietbar ist. Auch die Installation der oberen Haltevorrichtung ist hierdurch besonders einfach und schnell möglich.

Ebenfalls bevorzugt sind zwei insbesondere im Randbereich angeordnete Laschen für das Abstützelement und/oder für die Haltevorrichtung vorgesehen. Durch die randseitige Anordnung reichen jeweils zwei Laschen aus, so daß die Herstellungs- und Installationskosten wiederum gering gehalten werden können.

Ein Ausführungsbeispiel der Erfindung ist in der Zeichnung dargestellt und wird nachfolgend beschrieben. Es zeigen, jeweils in schematischer Darstellung:
- Fig. 1: eine Draufsicht auf eine kastenförmige Einrichtung mit erfindungsgemäßer Befestigungsvorrichtung,
- Fig. 2: eine Seitenansicht der kastenförmigen Einrichtung mit erfindungsgemäßer Befestigungsvorrichtung auf einem Dach,

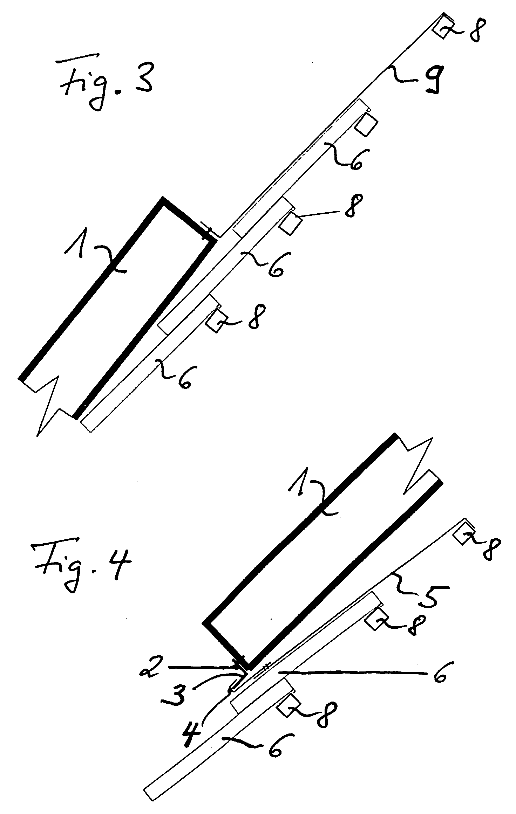

- Fig. 3: ein Detail gemäß Ausschnitt III von Fig. 2 und
- Fig. 4: ein weiteres Detail gemäß Ausschnitt IV von Fig. 2.

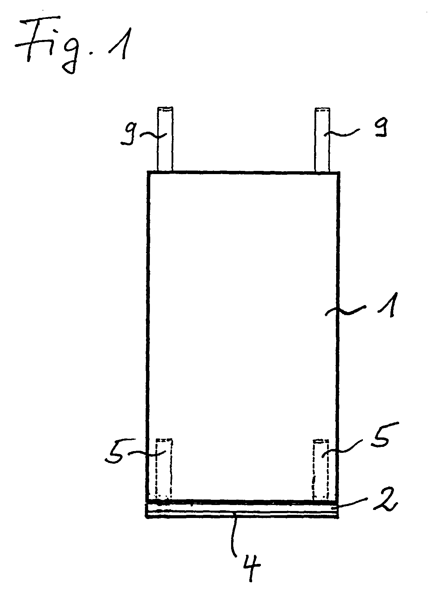

Die kastenförmige Einrichtung 1 in Fig. 1 ist beispielsweise ein Sonnenkollektor. Dieser weist an seinem unteren Ende ein beispielsweise angenietetes Winkelprofil 2 auf, welches mit seinem einen Schenkel 3 nach unten vom Sonnenkollektor 1 weg weist. Mit diesem Schenkel 3 greift das Winkelprofil 2 in ein U-Profil 4, welches sich über die gesamte untere Seite des Sonnenkollektors 1 erstreckt. Das U-Profil 4 ist also mit seiner Öffnung nach oben angeordnet.

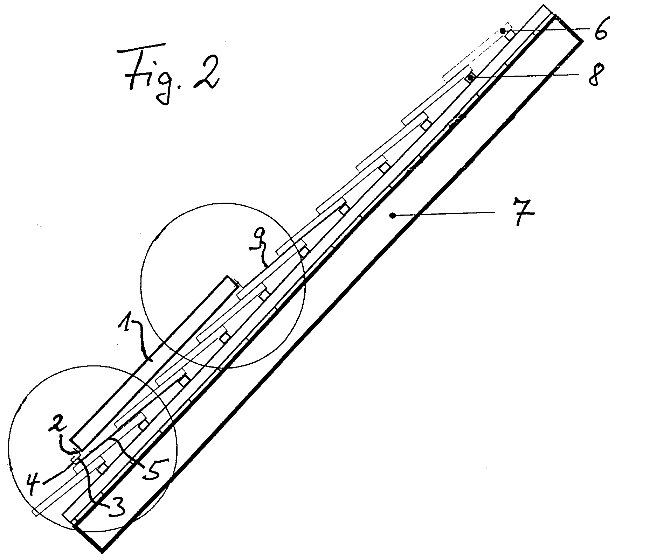

An dem U-Profil 4 sind in den beiden außenliegenden Randbereichen zwei Laschen 5 angebracht, insbesondere angenietet. Die Laschen 5 erstrecken sich vom U-Profil 4 nach oben und greifen, wie in Fig. 2 dargestellt, unter die Ziegel 6 eines Dachstuhls 7. An ihrem oberen Ende sind die Laschen 5 an einer Dachlatte 8 des Dachstuhls 7 festgeschraubt.

Am oberen Ende des Sonnenkollektors 1 sind zwei weitere Laschen 9 ebenfalls randseitig angebracht, beispielsweise angenietet. Die Laschen 9 sind hierfür an ihrem unteren Ende rechtwinklig vom Dachstuhl 7 weg abgewinkelt, um eine Anlage- und Befestigungsfläche mit dem Sonnenkollektor 1 zu bilden. Das obere Ende der beiden Laschen 9 ist wiederum an einer Dachlatte 8 festgeschraubt. Weitere Befestigungselemente sind für den Sonnenkollektor 1 nicht erforderlich.

Insgesamt ergibt sich dadurch eine sehr einfache, kostengünstig herstellbare und schnell installierbare Befestigungsvorrichtung für kastenartige Einrichtungen wie Sonnenkollektoren oder Solarmoduln. Zur Installation werden die Laschen 5 und 9 einfach unter die Ziegel 6 geschoben und an den Dachlatten 8 festgeschraubt. Die Laschen 9 können dabei bereits an der Oberseite der Einrichtung 1 befestigt sein. Die Laschen 5 werden zusammen mit dem Profil 4 befestigt. Bevorzugt wird dies als erstes vorgenommen.

Anstelle des U-Profils 4 können auch andere Aufnahmen, insbesondere abgekantete Winkelprofile mit einem spitzen Winkel vorgesehen sein. Außerdem kann auf das Winkelprofil 2 verzichtet werden und statt dessen die Einrichtung 1 direkt in das U-Profil 4 eingeschoben werden wenn dieses entsprechend groß ausgebildet wird.

### Bezugszeichenliste

- 1: Sonnenkollektor
- 2: Winkelprofil
- 3: Schenkel von 2
- 4: U-Profil
- 5: Lasche
- 6: Ziegel
- 7: Dachstuhl
- 8: Dachlatte
- 9: Lasche

## Patentansprüche

1. Vorrichtung zur Befestigung von kastenförmigen Einrichtungen (1) wie Sonnenkollektoren oder Solarmoduln auf geneigten Gebäudedächern mit Ziegel- oder ähnlicher Eindeckung,
**gekennzeichnet** durch ein unterhalb der Einrichtung (1) anzuordnendes, am Dachstuhl (7) verankerbares Abstützelement (4), auf welchem die Einrichtung (1) mit ihrem unteren Ende abstützbar ist, und eine am oberen Ende der Einrichtung (1) angreifende, am Dachstuhl (7) verankerbare obere Haltevorrichtung (9).

2. Vorrichtung nach Anspruch 1,
dadurch **gekennzeichnet,**
daß das Abstützelement (4) eine nach oben offene Aufnahme für das untere Ende der Einrichtung (1) oder ein damit verbundenes Eingriffselement (2) aufweist.

3. Vorrichtung nach Anspruch 2,
dadurch **gekennzeichnet,**
daß das Abstützelement (4) als spitzes Winkel- oder U-Profil ausgebildet ist.

4. Vorrichtung nach Anspruch 3,
dadurch **gekennzeichnet,**
daß sich das Profil (4) über die gesamte Breite der Einrichtung (1) erstreckt.

5. Vorrichtung nach Anspruch 4,
dadurch **gekennzeichnet,**
daß ein am unteren Ende der Einrichtung (1) befestigbares Winkelprofil (2) vorgesehen, welches zum Eingriff in die Aufnahme des Abstützelementes (4) ausgebildet ist.

6. Vorrichtung nach einem der vorhergehenden Ansprüche,
dadurch **gekennzeichnet,**
daß das Abstützelement (4) über mindestens eine unter die Ziegel (6) greifende Lasche (5) am Dachstuhl (7) befestigbar ist.

7. Vorrichtung nach Anspruch 6,
dadurch **gekennzeichnet,**
daß die Laschen (5) mit ihrem unteren Ende mit dem Abstützelement (4) verbunden, insbesondere vernietet sind, und daß das obere Ende der Laschen (5) am Dachstuhl (7), insbesondere einer Dachlatte (8) festschraubbar ist.

8. Vorrichtung nach einem der vorhergehenden Ansprüche,
dadurch **gekennzeichnet,**
daß die obere Haltevorrichtung (9) als unter die Ziegel (6) greifende Lasche ausgebildet ist.

9. Vorrichtung nach Anspruch 8,
dadurch **gekennzeichnet,**
daß das obere Ende der Laschen (9) am Dachstuhl (7), insbesondere einer Dachlatte (8), festschraubbar ist, und daß das untere Ende der Laschen (9) vom Dachstuhl (7) weg abgewinkelt und mit dem oberen Ende der Einrichtung (1) verbindbar, insbesondere vernietbar ist.

10. Vorrichtung nach einem der vorhergehenden Ansprüche,
dadurch **gekennzeichnet,**
daß zwei insbesondere im äußeren Randbereich angeordnete Laschen (5, 9) für das Abstützelement (4) und/oder für die obere HaItevorrichtung (9) vorgesehen sind.
